# EUROPEAN PATENT APPLICATION

(11) **EP 1 707 267 A1**
(43) Date of publication of application: **04.10.2006**
(21) Application number: 05102477.6
(22) Date of filing: 30.03.2005
(51) Int. Cl.: B01L 3/00, B01L 3/14, B29C 45/16

(54) **Device having a self sealing fluid port**

(71) Applicant: F. Hoffmann-la Roche AG, 4070 Basle (CH); Roche Diagnostics GmbH, 68305 Mannheim (DE)
(72) Inventor: Savatic, Goran, 6015, Reussbuehl (CH); Elsenhans, Olivier, 5643, Sins (CH); Sarofim, Emad, 6300, Zug (CH)
(74) Representative: Knauer, Martin

(57) **Abstract**

Manufacture of a device having a body comprising a cavity with a fluid port made from an elastomeric material adhering to the body is disclosed. The device can be used advantageously in reliable analyses in automated procedures.

At least one part of the device consists of a two component injection molded part.

## Description

### Field of the invention

The present invention relates to a device having a self sealing fluid port, methods for manufacturing such a device, a system for analysis of a fluid using said device, the use of said device in analyses of fluids and a method of analysis using said device.

### Background of the invention

Particularly in analytical laboratories there is a great interest in conducting analysis in a convenient, safe and reliable way. Particular problems are the contamination of reagents, samples and devices for performing an analysis by the environment and the contamination of the environment by reagents or samples.

Therefore devices have been proposed for the storage, the delivery and processing of a sample and/or reagents.

In a simple form, such devices are single cavity devices, based on tubes, having a substantially conical or/and cylindrical form, having a single fluid port, which after introduction of the sample and the reagents is closed by a cap attached to the tube body by a hinge and made from the same material as the device. In order to remove any liquid from or in order to add further reagents to the device, the cap is detached. Such devices are disclosed in EP 907 083. Those devices require handling of the cap during the analysis process, i.e. using a cap handler designed to pick up the cap from a storage, securing the cap on the device and removing the cap from the device.

In EP 724 483 there are disclosed tubes that are closed by a cap that can be pierced using a steel needle. However, those assemblies still need handling of the cap prior to the analysis, i.e. closing the tube using the cap after sample and reagents were added.

Those tube based devices all have the drawback that they only have one fluid port, through which both introduction and removal of liquid has to be made.

More complex analyses need more sophisticated devices. For example, in US 6,537,501 there is disclosed a cartridge comprising micro fluidic flow channels and further compartments, like a waste storage container. Furthermore, it discloses the use of a septum to close one or more inlet channels. Septa generally are stoppers for closing a fluid port, made from an elastic material such as rubber. The septa are manufactured as a mass article and inserted into fluid ports of tubes after their complete production. A septum can be pierced by a steel needle or cannula in order to introduce a liquid via the steel needle through the breakage in the septum into the interior of the cartridge. Conventional septa are used to close an opening if pressed into the opening. So a pressure perpendicular to the force for piercing the septum is continuously acting on the opening.

In US 2003/0138969, there is disclosed a method for introducing a fluid sample into a narrow tube through a pipette or syringe needle introduced into a fluid inlet port. In order to tightly contact the pipette tip or syringe needle with the inlet port, a stopper, called adaptor, made of rubber or silicon is used. The adaptor fits into the inlet port.

A safe and reliable storage and/or processing of fluids (mainly including liquids but also gases) is a first need. A second need is a system including a device for receiving and processing fluids having an inside, which is held closed prior to or / and during use or / and after use.

Such cases are e.g. the storage of liquids used for nutrition, storage of liquids used for medication, storage of liquids used for an analysis, the storage of a sample used for an analysis. Another use is a system including and using such a device for performing an analysis.

The safe storage and/or reliable processing of a fluid is based on the requirement that neither must the fluid get contaminated by the environment, nor must the fluid contaminate the environment. In case a device is needed which is held closed prior to use, this is based on the requirement, that the device must not get contaminated before use.

It was an object of the present invention to provide a device with an easy and reliable operable fluid-port, which can be manufactured economically.

### Summary of the invention

A first subject of the invention is a device having a body comprising a cavity and a fluid port made of an elastomer adhering to the body.

The second subject of the invention is a method for manufacturing such a device where the body is made from a first, rigid material and the fluid port is made from a second, elastic material, comprising
- a first molding step including
   a) providing a first mold reflecting an outer shape of the rigid body,
   b) injecting into the mold the said first, rigid material in liquefied form,
   c) waiting until said first material has become at least partially solid,
- holding the result of said first molding step in a second mold which reflects the shape of said fluid port
- a second molding step including
   a) injecting into said second mold said second, in the final status elastic material in liquefied form,
   b) waiting until the second material has become at least partially solid,
   and
- removing the result of said molding steps from said mold after solidification of said materials.

Still another subject of the invention is a system for analysis of a liquid comprising an instrument having a fluid actuation module containing a rigid fluid actuator, and a device according to the invention.

Furthermore, a subject of the invention is a device manufactured according to the method for manufacturing according to the invention.

Another subject of the invention is the use of a device according to the invention in a method for analysis of a liquid.

Still another subject of the invention is a method of analysis of a fluid or components thereof comprising
- providing a device according to the invention,
- introducing the fluid into said device through said fluid port by piercing said fluid port and dispensing said fluid through the breakage achieved by said piercing, and
- determining any property or change of property of said fluid or component thereof.

### Brief description of the drawings

In FIG. 1a and 1b, two embodiments of the device according to the present invention are shown.

In FIG. 2a and 2b, two alternative devices are shown.

### Detailed description of the invention

A device of the present invention is useful in receiving a fluid or/and storing a fluid or/and chemically or physically treating a fluid, or / and analyzing a fluid.

Said fluid can be a sample, a reagent, a diluent or a process fluid or a combination thereof or a fluid derived therefrom. It can be liquid or gaseous.

The size of the device according to the invention is mainly determined by the amount of fluid to be held or processed in the device and by the kind and number of steps to be performed. In a first embodiment, the device is used as a means to isolate components of the fluid. The components will be retained in the device, while the remainder of the liquid is allowed to exit the device. In this case, the volume of the liquid may exceed the volume of the cavity in the device. This allows the device be comparably small. For this embodiment, the total volume assumed by the device will be preferably between 100 µl and 10 ml.

In a second embodiment, which is preferred, the device will be only slightly larger as the volume of the fluid and of any reagents intended to be reacted with the fluid. As volumes of fluids preferably have a volume of more than 0.1 µl, preferably between 0.2 µl and 1L, the volume of the device will exceed 200 µl, preferably be between 200 and 1.1 L, and most preferably will be between 500µl and 110 ml. Optionally the device has a substantially flat structure, i.e. it in its main part has a thickness of less than 50 mm, preferably of between 0.2 and 10 mm, a length and width of less than 300 mm, preferably of between 2 and 150 mm. If parts of the device need larger thickness, this part may exceed over the substantially flat structure.

For receiving and maintaining a fluid, the device has a body, which further contains one or more cavities, which temporarily or continuously receive or/and maintain the fluid or a fluids derived therefrom.

Conveniently, the body of the device is formed from at least one relatively rigid polymer. Polymers for the body according to the present invention are preferably selected from the group of thermoplastic material, for example, polypropylene, polyethylene, polystyrene, polycarbonate and polymethylmethacrylate. Further preferably, the body is made of a material, which can be liquefied by heating above its melting temperature, and which in molten state can be introduced into a mold to reflect the particular form the body or a part thereof is intended to assume.

The device according to the invention comprises a cavity. Typical volumes of the cavity can range from 1 µl to 1L. Preferably 100 µl to 100 ml. This cavity can have different forms adapted to the various intended uses of the device. The cavity can be divided into multiple sections having channels and chambers. A preferred cavity contains one or more channels or/and one or more chambers,.

The use of those channels can be various, e.g
- delivery of fluid between two locations within the device (e.g. chambers),
- delivery of fluid in or out of the device,
- measuring fluid,
- processing a fluid or processing mater being solved or suspended in the fluid.

The use of those chambers can be various, e.g
- storing, receiving, delivering fluid
- processing a fluid e.g. for analysis of mater in the fluid
- adapted to measure a physical of chemical property of a fluid (e.g. for performing optical absorptions or fluorescence measurement)

More preferred the cavity comprises two or more channels, one leading to the chamber, and one leading away from the chamber. In a preferred embodiment, the cavity has a volume of less than 1 L, preferably between 1 µl and 100 ml. Channels formed within the device, particularly in the device, preferably the body, preferably have a cross section of less than 10 mm², preferably of between 0.01 and 2mm². Cavities formed within the body preferably have dimensions, which are suitable for the intended use of the process. Channels for transporting fluids through the device will preferably have smaller dimensions than chambers for keeping the fluids or/and performing a process, preferably a chemical reaction. For example, a chamber for separating nucleic acids from a fluid will preferably have a volume of between 5 and 100 µl. A chamber for performing polymerase chain reaction may have a volume of between 0.1 and 500 µl. If combined amplification and detection is intended to be made in the chamber, the chamber preferably will have a volume of between 0.1 and 500 µl. The depth of a preferred substantially flat chamber will be between 10 µm and 49 mm, preferably between 10 µm an 20 mm, while the length and breadth of the chamber may be between 10 µm and 295 mm, preferably between 20 µm and 145 mm. Very preferred, the chambers are flat chambers of a thickness of less than 2000 µm, preferably between 50µm and 5 mm. A first channel formed in the body will preferably lead from an input location into a chamber and a second channel will preferably lead from said chamber to an outlet location on the device. If more than one chamber is provided in the body, there may more channels e.g. connecting the chambers in the body. Optionally chambers and channels are arranged such that any liquid introduced through an inlet channel into said chamber will fill said chamber prior to leaving the chamber through an outlet channel.

Parts of the cavity may contain inserted materials, so called "solid phases", which may be used for adsorption and/or reactions on the surface. Most preferable, the cavity is closed by the body carrying the fluid port and a sealing wall attached to the body.

The final device is then generally a composite of several elements. This means it consist of two or more parts manufactured separately and assembled subsequently, at least one part of the device consisting of the 2-compound injection molded part, having a rigid body and an elastomeric fluid port adhering to said body. Because it has proven to be difficult to manufacture a body comprising a cavity suitable for chemical analyses in one piece, it is preferred that the device is made of two or more parts, which are combined to create the one or more cavities.

In a very preferred embodiment, the device comprises a first element called "body" carrying the fluid port, and a second element called "sealing wall". The body having grooves or/and channels. The rigid body provides the stiffness to the device to maintain the shape of the cavity throughout the process of manufacture and use of the device.

The two parts - body and sealing wall- can be joined by known methods. In the preferred embodiment, wherein the sealing wall is a thin layer and the rigid body is made of polymer, e.g. polystyrene, the two parts can be combined and then sealed by welding, for example LASER welding, ultrasound welding, thermo sealing or gluing. The two parts can also only be clamped or stick together. In case of clamping or sticking the parts together the elastomeric part can be used as sealing part between the body and the sealing wall.

The joining method, the material of body and the material of the sealing wall have to be selected to fit together. For example, if the joining method is Laser welding, then the bulk material of the body and the sealing wall are of the same material (e.g. polypropylene) but one of the two materials is stained to have an absorption for the laser energy. If the joining method is ultrasound welding both materials are typically the same. If the joining method is thermo sealing the sealing wall is a thermo sealable foil adapted to thermically seal to the body. Such thermo sealable foils are generally composites of several materials, wherein the layer opposed to the sealing is able to seal to the body. A typical foil suitable to be joined to a polypropylene body has composite layers of aluminum or polyester and polypropylene.- Such sealing foils are known and are commercial available. In the case where, the sealing wall is a foil, the foil preferably is between 20 and 1000 µm thick, more preferably between 50 and 250 µm.

The device can contain further elements that may be useful for the intended purpose of the device. For example, heat transferring walls or heating elements may be integrated into either the sealing wall or the body. The heat transferring wall can be used to heat or/and cool fluids contained in the device.

In another embodiment, electrodes can be incorporated into the body or the sealing wall. Electrodes can be used to determine the electrochemical status of fluids contained in the device or to start electrochemical reactions within the device. In this case, the device will have appropriate connectivity to electrical circuits.

In another embodiment, optical windows (allowing an at least partial transmission to a wavelength) can be incorporated to the body or sealing wall.

The device according to the present invention is designed to hold, deliver or receive a fluid. In order to introduce fluid into or/and remove fluid from the cavity in the body, the device according to the present invention has one or more fluid ports. Furthermore, the device can be used for holding a fluid within the cavity, more preferable in one or more cavities. Furthermore, a fluid contained in the device can also be delivered to the outside, for example, by forcing the fluid to quit the cavity through the fluid port in the device. This fluid port can be the same or a different fluid port used to introduce the fluid into the device. Preferably, the device has two or more fluid port, at least one being closed according to the invention. More preferably, two or more and most preferable all fluid ports in the device are closed using a fluid port made of an elastomer. Forcing a liquid out of the device may require asserting pressure to force the liquid through the fluid port, or may require applying negative pressure or even a vacuum to the cavity. This can be done by entering a rigid fluid removal actuator through a fluid port in the device and applying negative pressure through that actuator. One or more or even all of those openings are closed by the fluid port.

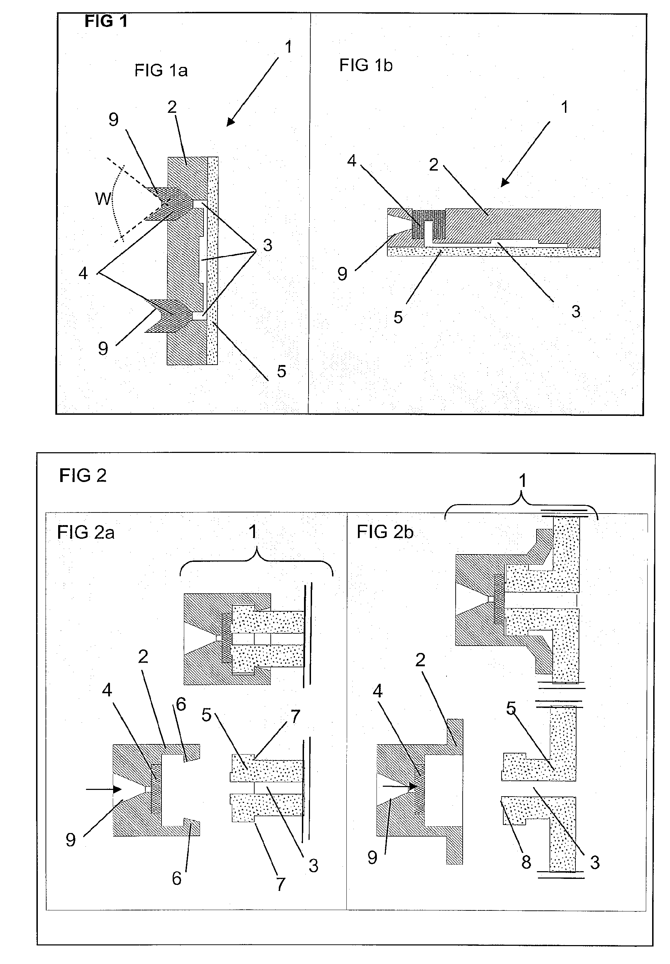

For an easier interfacing with a fluid actuator as a hollow needle, the fluid port formed from the elastomeric material may have a recess on the outer side. This recess is at least on parts of it a conical shape, where the angle Fig. 1, (W) is in range of 5 to 150°, more preferably between 15 and 90 °.

According to the present invention, the fluid port is made of an elastomer, which is shaped in a 2-compound (2C) injection molding process. The material of the elastomer is preferably selected from the classes of thermoplastic elastomers (TPE), thermoplastic vulcanicates (TPV), or vulcanizible elastomers (VE), materials which are generally used in 2C injection molding processes. The first and second materials are selected to have an adhesion to each other.

Several thermoplastic elastomers are useable as finally (at room temperature) elastomeric materials, e.g. thermoplastic polyolefins (TPO) or thermoplastic polyurethanes (TPU) or styrol-block-copolymers (SBS, SEBS) Also TPVs, thermoplastic vulcanicates, which are a special class of TPE that containing a cross linked rubber phase dispersed within a thermoplastic polymer phase, can be used. TPVs offer elastomeric characteristics similar to cross linked rubbers, but are processable as thermoplastic polymers.

For details on TPE see the publications of the British Plastics Federation, e.g. on.http://www.bpf.co.uk/bpfindustry/plastics materials thermplasrubber TPR.cfm.

A preferred material combination is the combination of polypropylene as rigid material and TPO as elastomeric material.

Generally the elastomer is selected to fit the fabrication (2 compound injection molding process) and is selected to have a certain adhesion to the material of the body. Typical adhesion force between the rigid body and the elastomeric fluid port is at least 0.1 N, typically more than 1 N.

A thermoplastic elastomer (TPE) has the property to liquefy when heated to a temperature above its melting point without decomposition, and when cooled to a temperature below its melting point will solidify reflecting the geometrical form of the mold in which it is kept. A preferred thermoplastic elastomer are Santoprenes ® from the company Advanced Elastomeres . A preferred group of thermoplastic elastomers has a processing temperature between 180 and 220°C. The elastomer has in its final shape a Shore hardness of 0A to 100A, preferably in a range from 20A to 60A.

The elastomeric fluid port forms a pierceable barrier between the cavity and the outside. The elastomeric fluid port protects the device's cavity from contamination from the environment and vice versa, fluids stored, processed or analyzed in the device can not contaminate the environment.

The fluid port is construed such that it reliably closes the cavity in the device, but has dimensions allowing piercing of the fluid port with a rigid fluid actuator, preferably a pipette tip or a hollow steel needle from outside of the device, such that after piercing fluid can be introduced from the actuator into or out of the cavity of the device through the fluid port. More preferable, a fluid port according to the invention covers one end of a channel that would, if not covered, be freely accessible to fluids from the surface of said body. In this case, the fluid will be introduced through the actuator into or our out of the cavity present in the device, preferably through a channel in the device leading to a chamber. There are several geometric solutions possible regarding the geometry of the inlet and the fluid port.

In a first preferred embodiment, wherein the device is a generally flat, shown in FIG. 1 a, a fluid port (4), or two fluid ports (4), are located on a flat side of the device (1). In this case, the one or more fluid ports are provided on the body side of the device, i.e. leading from the flat side into the cavity (3) through the body. Thus, the fluid port can be pierced from the flat side of the device.

In another embodiment, shown in FIG. 1 b, the fluid port(4) is also provided in the body on the flat side, but the fluid port is intended to close an opening on a side perpendicular to the flat side, for example, a narrow side of the device. Thus, the fluid port can be accessed and pierced from the narrow side of the device.

In another embodiment, shown in FIG. 2 a, the body has the form of a cap and the cavity (3) is partially or completely contained within the sealing wall (5). In the lower part of FIG. 2 a, the body cap is shown above a part of the sealing wall (only partial view of the whole device, showing the fluid port section of the device). The body further comprises a snap mechanism (6), while the sealing wall contains a snap-in recess (7). In the upper part of FIG. 2 a, the assembled device is shown, wherein the rigid carrier is firmly connected to the sealing wall. In the present case, the connection is made by a form fit, particularly a snap-in connection. As further shown in FIG. 2 b, a sealing rim (8) on the sealing wall (5) is provided that compresses the fluid port so as to provide a fluid tight connection between the body and the sealing wall.

In another embodiment shown in FIG. 2 b, the body is again used as a cap to close an opening in the sealing wall. Instead of a snap-in connection, this embodiment is held together using a glue or by welding. By placing the rigid body (2) onto the sealing wall (5), the device is assembled.

The use of an elastomer, which is shaped in a 2C injection molding process as the fluid port has the advantage, that the materials can be selected that they adhere to each other. This adhesion between the body and the fluid port is achieved by the characteristics of the material of the rigid body and the material of the elastomeric fluid port. In the molten state, the elastomer can be brought into a form, which tightly adheres to the body and seals any openings in the body. This form may have projections and recesses that reach into recesses in or surround projections in the body, particularly in the vicinity of the fluid port. Therefore, the force fit preferably is made via surfaces having an angle formed by the outer surface of the carrier and the surface of the carrier used for connection with the fluid port.

Preferably, the angle (17) is between 40 and 180°, more preferably between 90 and 180 °. Most preferably, there is at least one carrier surface having an angle of between 90 and 180° used for the connection of the fluid port. The force fit has the effect that the fluid port is tightly connected to the body, so that even when piercing the fluid port using a rigid fluid delivery actuator such as a steel needle and withdrawing the actuator from the fluid port after dispensing of a fluid into the cavity, the connection between the fluid port and the body is still impervious to the fluid.

In one embodiment, the fluid port of the present invention is not intended and not constructed to be removed from the device. The fluid port of the present invention cannot be removed from the body without seriously damaging the device, i.e. disrupting the integrity of the device. The intended function in this connection is a sufficient separation of the devices inside (cavities) and the devices outside, mainly to avoid undesired or uncontrolled or excess transport of mater from the environment to the devices inside and vice versa. Such a mass transport can be pressure driven, diffusions driven or by any other mechanism e.g. gravity driven (dust).

As already indicated before, the elastomer, which is shaped in a 2C injection molding process preferably, allows piercing of the fluid port. Piercing causes an introduction of a rigid fluid delivery actuator, such as steel cannula and passing an opening in the cannula into the cavity. By allowing this access, the fluid port is broken at the site, where the actuator enters and passes the fluid port. In another embodiment the fluid port may be pre-pierced, but the pierced path is closed by repulsing forces of the elastomer.

According to final application the device is tight (means sufficient closed to a transport of mater in or out of the device)
a) only during storage
b) during storage and use
c) during storage, use and after use

The fluid port is generally designed to avoid an uncontrolled transport of mater in or out of the cavity. At the point of entry of the fluid actuator the thickness of the elastomeric fluid port is in a range of 0.1 mm and 40 mm, more preferably in a range of 1 to 10 mm. For receiving a sufficient repulsion of the elastomer towards the piercing path, for closing the piercing path after fluid actuation, a sufficient diameter of the elastomer is required. Therefore at least at one point of the piercing path a diameter of the elastomer must be > 3 x the diameter of the fluid actuator.

A preferred embodiment of the fluid port allows self-sealing closing of the space between the fluid actuator and the fluid port, such that fluid cannot escape. Furthermore, after removal of the actuator, the fluid port still closes the opening of the body and the piercing path does not allow fluid to escape the device even at a differential pressure of 1 bar.

In a preferable embodiment, the device is a micro fluidic device. Micro fluidic devices according to the here used understanding have one or more channels with a cross section of more than 0.1 µm², more preferable between 10 µm² to 10 mm². Micro fluidic devices may furthermore or alternatively comprise one or more chambers having a larger cross section larger than the channels. The chamber of a micro fluidic device may have a volume of between 10 nl and 50 ml, more preferable between 1 µl and 25 ml.

The device may also have fluidic or micro fluidic functions. Those functions are generally known to be functions for physically treating the fluid in said cavity. Those can be static elements, like fittings, comprising walls and surfaces, for example for mixing, dividing or combining of fluids. Other functions that may be provided by the cavity are optical functions. For this reason, the body around said cavity, preferably a chamber, is transparent to allow entering or/and escaping light from the cavity to the outside of the device. Preferably, the cavity has dimensions that allow collecting fluid in an amount that is sufficient for reliable detection of components contained in the fluid. Another function of the cavity may be to receive materials to react with the fluid. Such materials may be selected from the group of soluble or insoluble reagents, or combinations thereof, or both, even in separate parts of the cavity, or chambers. Soluble reagents may be reagents to support lysis of a sample, to amplify a nucleic acid contained in the sample or a liquid derived therefrom, or to provide a signal when reacting with the components of the sample to be determined. Insoluble reagents may be solids that are designed to immobilize components of the fluid, or compounds derived therefrom. Examples for nucleic acid immobilizing solids are glass fleece or magnetic particles, which are capable to bind nucleic acids from a chaotropic solution. Appropriate materials are known to the person skilled in the art of nucleic acid sample preparation.

In order to serve the function to hold, deliver or receive the fluid, the fluid port is located in the device such as to be accessible to a rigid fluid actuator from outside of the device. This can be done by constructing the device such that there are no elements of the device hindering movement of the actuator in direction to and finally through the fluid port. Practically, the fluid ports will be located on a flat surface of the device. In order to improve accessibility, the device may further comprise surfaces guiding the actuator to the point in the fluid port, at which the breakage of the fluid port by the actuator is intended. Such surfaces can be provided either on the body or on the fluid port. The guiding surfaces are shown in the figures with reference numeral 9. The guiding surfaces most preferably have the form of a conus, getting smaller towards the position of the fluid port to be pierced.

A fluid that can be received, held or delivered in the device according to the present invention can be any fluid that is of interest to be subject to a particular treatment. Preferably, the fluid is a liquid. More preferable, the liquid is an aqueous solution. In the preferred use of the device according to the invention, components of the liquid are intended to be treated or analyzed. In a diagnostic device, the liquid contains components to be determined in an analysis. Such liquids can be selected from the group of environmental fluids, like water from a river or a fluid extracted from soil, food fluids, like a juice or an extract from a plant or fruit, or a fluid received from animal or human body, like blood, serum, plasma, urine, cerebrospinal fluid or lymphatic fluid, or liquid derived therefrom, like liquids containing components isolated from the before mentioned liquid, like liquids containing purified antibodies or nucleic acids. The liquid further can contain additional components useful for the analysis of components of the liquid or reagents for chemical reactions to be performed within the device. Those reagents can comprise labelled binding partners, for instance labelled oligonucleotide probes or dyes.

A further subject of the present invention is a method for manufacturing a device having a rigid body comprising a first, rigid material comprising a cavity and a fluid port being of a second, elastic material, comprising
- a first molding step including
   a) providing a first mold reflecting an outer shape of the rigid body,
   b) injecting into the mold the first material in liquefied form,
   c) waiting until said first material has become at least partially solid,
- holding the result of said first molding step in a second mold which reflects the shape of said fluid port,
- a second molding step including
   a) injecting into the first part of said second mold the second material in liquefied form,
   b) waiting till the second material has become at least partially solid,
      and
- removing the result of said molding from said mold after solidification of said materials.

Preferably, the device is a device as described above.

This method essentially combines the production of an integrated device by an at least two-step molding process. The first, rigid material, e.g. for the manufacture of the body, preferably is a material selected from the group of thermoplasts. Particularly preferred are polypropylene, polyethylene, polystyrene, polycarbonate and polymethylacrylate. Those are the materials that are the preferable materials for forming one or more parts of the body of the device as described above. In order to bring the first, rigid material into a form, which is needed for the device, a mold is provided to reflecting an outer form of the body. Molds for injection molding processes are generally known and used in the art. Preferably they consist of metallic or ceramic mold, preferably comprising a cavity having one or more fluid ports for filling the mold with the liquefied material. The mold preferably is made from two or more parts that are connected during the molding process and can be separated after solidification of the material in the mold.

Thus, the result of the molding process can be removed from the mold. Practically, the final form of the result of the molding process will be determined by the shape of the mold. For example, grooves in the outer surface of the result of the molding process, as useful to create channels and chambers in the body, are reflected by protrusions into the cavity of the mold. Channels through the result of the molding process, e.g. the body, like those channels leading from one side of the carrier containing a chamber to the other side of the carrier having the opening, are reflected by a rod connecting a first part of the mold with a second part of the mold.

To perform the molding process, the first, finally rigid material is liquefied by heating it to a temperature above the melting temperature. The material is then injected into the cavity of the mold, preferably by applying pressure and allowing the air contained in the cavity to escape through a fluid port different from the fluid port through which the material is injected.

The result of the first molding step will be the subject of a second molding process using the second material. This requires that the surfaces of the result of the first molding step that should be connected to surfaces of the second part of the device, i.e. the fluid port, are accessible to the second material in liquefied form. To achieve this, several modes are available. In all those ways, it is preferred that the first material has become at least partially solid. More preferably, the temperature of the first material has fallen or been reduced to a temperature below melting point. This can be done by active or passive cooling. In a first embodiment, a part of the mold covering the surface of the form resulting from the first molding step is removed, in order to allow access of liquefied second material to said surfaces. In addition, a second mold is connected to the remaining part of the first mold, reflecting the outer form of the fluid port. This will form a cavity within the finally assembled mold reflecting the outer form of the fluid port as connected to the body of the device.

In a second embodiment, the result of the first molding step is removed from the first mold and introduced into a second mold, which reflects the form of the body surrounding the part of the fluid port to be produced and a second part reflecting the outer form of the fluid port to be molded onto the result of the first molding step.

This cavity of the second mold is then filled with the second material liquefied by injection.

If additional components need to be added to the body or the device, this can be done either by additional molding steps as described above, or after removal of the result of the molding process from the mold and solidification of the materials.

While in the above, a process is described, in which the first material is the more rigid material and the second material is the material of the fluid port, preferably an elastomer, which is shaped in a 2C injection molding process, the process can be performed in an alternative way, generally changing the order of the molding steps. In the alternative process, a mold reflecting an outer form of the fluid port is provided, analogous as described above for the rigid material, the second material in liquefied form is injected, and after partial or total solidification of the second material, a second molding step is performed using the first, rigid material in liquefied form in a second mold.

Therefore another subject of the invention is a method for manufacturing a device having a body comprising a first, rigid material comprising a cavity and a fluid port being of a second, elastic material, comprising
- a first molding step including
   a) providing a first mold reflecting an outer shape of the fluid port,
   b) injecting into said first mold the second material in liquefied form,
   c) waiting until said second material has become at least partially solid,
- providing the result of said first molding step in a second mold a first part of which reflects at least a part of said first mold and a second part reflecting an outer shape of said body,
- a second molding step including

a) injecting into the second part of said second mold the first material in liquefied form,
b) waiting until the first material has become at least partially solid,
   and
- removing the result of said molding from said mold after solidification of said materials.

In the above methods for manufacturing, further assembly steps can be added. For example, any cavities can be sealed in additional steps, preferably by applying a sealing wall to the result of the molding steps, that sealing wall confining a wall of that cavity in the body, for example completing the form of one or more channels or/and chambers. This can be done by connecting surfaces of the sealing wall and the result of the molding steps tightly and cluing or welding the materials together. Preferred modes of connecting a carrier and a sealing wall are LASER welding, ultrasound welding, thermo sealing or gluing.

Another subject of the present invention is a system for analysis of a liquid comprising
- an instrument having a fluid delivery module containing a rigid fluid actuator, and
- a device according to the invention.

Instruments for analysis of a fluid are generally known. Those include the modules generally required for analyses. Preferred modules for such instruments are optics for determining optical properties or changes in optical properties of the liquid, mechanics to move the liquid from a first position to one or more other positions, and liquid handling modules for dispensing or/and aspirating fluids from tubes, vessels or reagent containers. The system according to the invention requires a rigid fluid actuator, which is used to dispense fluid into the device according to the invention or/and remove liquid from the device. The function of dispense or deliver and remove or receive fluid to and from the device is according to the invention to be considered both as active and passive handling. For example, receiving a fluid from a first rigid actuator can be made by either applying the fluid under pressure to the device to press the fluid into the device or by applying negative pressure to the cavity so as to suck fluid into the device and removing or delivering fluid from the device to the outside can be achieved by either applying pressure to the cavity, e.g. by pumping a fluid, such as a liquid or a gas through a first fluid port, or applying negative pressure to the cavity so as to suck the fluid through an fluid port.

A rigid fluid actuator useful in the present invention is a device having three characteristics. It must be capable of piercing the fluid port of the device. This is achieved by a certain rigidity. The required rigidity is provided by using e.g. metals for this actuator. Preferably, the device designed as a tip to break the seal. Furthermore, the device needs to be as long as to reach through the fluid port into the interior of the device. Thus, the device has preferably an elongated and thin shape. Thirdly, the device must provide a channel to transfer the liquid in or out of the device. Thus, cannulas or cannula-shaped or hollow needle-like devices are preferred. The outer diameter of the fluid actuator can be in a range of 0.1 to 3 mm, more preferred in a range of 0.2 to 1.5 mm, most preferred in range of 0.3 to 0.8 mm.

The device is preferably used in an instrument. The instrument contains in fluidic communication with the fluid actuator means to apply positive or negative pressure to deliver or to receive fluid. Appropriate means include syringe pumps. The fluid actuator position relatively to the device may be controlled by an automatic system.

In a very preferred use, the instrument further contains supplemental means to perform an analysis, e.g. a heating element. This heating element is positioned such that it can contact the device at a position, wherein the heat can be used to heat up fluid within the device, preferably when the fluid is contained in a cavity within the device. An example of an instrument comprising a heating element is a thermocycler. Thermocyclers are generally known to apply a profile of different temperatures in repeated manner to a fluid. An exemplary thermocycler is described in EP 236 069. Preferred heating elements are piezo elements or resistance heating elements.

In order to perform detection of properties or change of properties of the liquid during processes performed in the device, the instrument further can comprise a detection module. Appropriate detection modules are generally known and depend upon the kind of property or property change performed during the presence of the liquid in the device. For example, if the property is a change in an optical signal, for example a fluorescent signal, the detection module will comprise a light source positioned in the instrument such that the device, preferably a chamber in that device, can be irradiated, and an irradiation receiving unit, preferably a light sensitive cell for receiving irradiation from the liquid contained in the device and transmitting an electrical signal to an evaluation unit.

If the process to be performed in the device requires connectivity of components of the device, such as electrodes or heating foils in the device to an electric circuit of the instrument, such connectors are preferably provided on the instruments on positions that are located such that the connectors on the instrument are connected to their counterparts on the device, when the device is inserted into the instrument.

Preferably, the system according to the invention comprises in addition a fluid container (e.g. for waste collection) or/and one or more reagent containers.

A further subject of the invention is the use of a device according to the invention in a method for analysis of a sample e.g. in an in-vitro diagnostic test. Therefore, another subject of the present invention is a method of analysis of a sample or components thereof using one or more reagents comprising
- providing a device according to any of claims 1 to 12,
- introducing a fluid into said device through said fluid port, wherein said fluid is selected from said sample and said reagents, and
- determining at least one property of the fluid which relates to the presence or content of a substance present in the sample.

In one embodiment, the device already contains reagents useful for the analysis, and the sample is introduced through the fluid port. In another embodiment, the device contains a sensor which is useful for determining a property of the sample or the liquid derived therefrom, using or not using reagents.

The fluid, preferably a sample to be analyzed or/and reagents, is preferably introduced into the device by a rigid fluid actuator such as a steel cannula through a first fluid port into a channel leading to a chamber. The chamber further contains at its end opposite to the inlet point of the first channel an outlet point for a second channel, said second channel leading to a second opening, that second opening being closed by another fluid port as described above. While applying pressure to the liquid in the cannula to enter the channel, a second cannula is present pierced through that second fluid port such that the pressure can escape through that second cannula. In this very simple embodiment, the liquid contains the fluid to be analyzed as well as all reagents needed for analysis of the components of the fluid to be detected, such as a labeled binding partner for the component to be determined in the fluid. The liquid is proceeded into the cavity by applying pressure through the first cannula or by applying negative pressure to the second cannula. Detection can start in the chamber, when the reaction has proceeded as required. This can be made by irradiating the liquid in the cavity with light of a wave length at which one of the components or reagents in the fluid has a measurable absorption. Determination of light leaving the cavity, for example by fluorescence, can be used to determine the absorbance of the liquid or any changes in absorbance of the liquid over time or compared to a standard liquid.
In a very preferred embodiment of this method of analysis, the component of the liquid to be analyzed is a nucleic acid suspected to be contained in a fluid, for example, parts of the genome of hepatitis C virus. The reagents for analysis will then contain primers for the amplification of a particular fragment of said nucleic acid and a probe for binding to the amplified fragment. A very preferred embodiment of such reaction is disclosed in EP 543 942. In order to apply thermo cycles to the liquid contained in the chamber, the instrument used contains a combined heating/cooling block to bring the content of the chamber to the temperature in a profile as needed to amplify the nucleic acids.

An advantage of the device according to the present invention is that the interface between the device and the closure of the device is very tight. This allows the application of high pressure to the inside of the device, for example, when the cavity within the device has channels of very small dimension or/and the use of liquids, which tend to clot during transport or reaction in a micro fluidic device. An advantage of the manufacturing device is that using this method it is possible to provide a device, which is tightly sealed. The device according to the invention can be very advantageously used in systems for analysis of a liquid, as due to the tightness of the sealing, the instrument is better protected from contamination by fluid escaping the device, and on the other hand the interior of the device is protect from contamination from the ambient. Using the device according to the invention furthermore leads to increased convenience in analyses, as analysis can be automated using automated fluid delivery through a rigid fluid actuator. In addition, particularly for small devices, manufacturing gets more simple and reliable.

### Reference numerals:

- 1: Device
- 2: Body
- 3: Cavity
- 4: Fluid port
- 5: Sealing wall
- 6: Snap-in projection
- 7: Snap-in recess
- 8: Sealing rim
- 9: Guiding for the fluid actuator

## Claims

1. A device having a body comprising a cavity and a fluid port made of a thermoplastic elastomer adhering to the body.

2. The device according to any of the proceeding claims, wherein said device is a container for holding, delivering or receiving a fluid.

3. The device according to any of the proceeding claims, wherein said cavity comprises channel, a chamber or a system of channels and chambers.

4. The device according to any of the proceeding claims, wherein the fluid port has force fit versus the body.

5. The device according to any of the proceeding claims, wherein the device is a micro fluidic device.

6. The device according to any of the proceeding claims, wherein said cavity has fluidic or micro fluidic functions as static mixing, or optical functions as transparency for detecting light, or sections for chemically or physically treating the fluid.

7. The device according to any of the proceeding claims, **characterized in that** said fluid port is located in said device to be accessible to a rigid fluid actuator from outside of the device.

8. The device according to any of the proceeding claims, wherein said fluid port covers a channel structure in said body.

9. The device according to any of the proceeding claims, wherein said cavity is confined by the body and a sealing wall covering the cavity.

10. The device according to claim 9, wherein said sealing wall is a thin foil.

11. The device according to claim 10, wherein the thin foil has a heat transfer rate of more than 400 W/m²/K

12. The device according to any of claims 10 to 11, wherein said thin foil and/or the body has more than 2% transmission for an electromagnetic wave with a wavelength in a range from 300 to 4000 nm.

13. The device according to any of the preceding claims, wherein the fluid port has a conical recess for guiding a fluid actuator.

14. The device according to any of the preceding claims further containing a material for solid phase adsorption.

15. A method for manufacturing a device having a body comprising a first, rigid material comprising a cavity with an opening closed by a fluid port being of a second, elastic material, comprising
- a first molding step including
a) providing a first mold reflecting an shape of the rigid body,
b) injecting into the first mold the first material in liquefied form,
c) waiting until said first material has become at least partially solid,
- providing the result of said first molding step in a second mold a first part of which reflects an outer form of said fluid port and a second part reflecting at least a part of the first mold,
- a second molding step including
a) injecting into the first part of said second mold the second material in liquefied form,
b) waiting until the second material has become at least partially solid,
and
- removing the result of said molding steps from said mold after solidification of said materials.

16. A method according to claim 13, **characterized in that** said fluid port is located in said device to be accessible to a rigid fluid delivery actuator from outside of the device.

17. A method according to claim 13, **characterized in that** said fluid port is a septum, attached to the first, rigid material.

18. A method for manufacturing a device having a body comprising a first, rigid material comprising a cavity with an opening closed by a fluid port being of a second, elastic material, comprising
- a first molding step including
a) providing a first mold reflecting an outer shape of the fluid port,
b) injecting into said first mold the second material in liquefied form,
c) waiting until said second material has become at least partially solid,
- providing the result of said first molding step in a second mold a first part of which reflects at least a part of said first mold and a second part reflecting an outer shape of said body,
- a second molding step including
a) injecting into the second part of said second mold the first material in liquefied form,
b) waiting until the first material has become at least partially solid,
and
- removing the result of said molding from said mold after solidification of said materials.

19. The method according to any of claims 13 to 16, wherein said second material is an elastomer, which is shaped in a 2C injection molding process.

20. The method according to claim 17, wherein said first material is selected from the group of thermoplasts, e.g. polypropylene, polyethylene, polystyrene, polycarbonate, polymethylmethacrylate.

21. The method of any of claims 15 to 20 further comprising the step of sealing said cavity of said body using a sealing wall.

22. The method according to claim 21, wherein said sealing is done by LASER welding, ultrasound welding, thermal sealing or gluing.

23. A system for manipulating a fluid comprising
- an instrument having a fluid actuation module containing a rigid fluid actuator and
- a device according to any of claims 1 to 22.

24. A system according to claim 23 further comprising at least one reagent.

25. The system according to any of claims 23 to 24, wherein said rigid fluid actuator is a hollow needle, said hollow needle being moveable relatively to the device from at least one position wherein said fluid actuator is not fluidically connected with the cavity, to a second position, where the fluid actuator fluidically connected to the cavity, by piercing through the fluid port.

26. The system according to any of claims 23 to 25, wherein said instrument contains further means for performing an analysis.

27. The system according to any of claims 23 to 26, further comprising a heating element, preferably a thermocycler.

28. The system according to any of claims 23 to 27, wherein said instrument further comprises a detection module.

29. Use of a device according to any of claims 1 to 14 in a method for analysis of a fluid.

30. A method of analysis of a sample or components thereof using one or more reagents comprising
- providing a device according to any of claims 1 to 12 or a system according to any of claims 23 to 28,
- introducing a fluid into said device through said fluid port, wherein said fluid is a sample being analyzed or/and reagents, and
- determining at least one property of the fluid which relates to the presence or content of a substance present in the sample.
